# EUROPÄISCHE PATENTSCHRIFT

(11) **EP 3 785 522 B1**
(45) Veröffentlichungstag und Bekanntmachung des Hinweises auf die Patenterteilung: **09.11.2022**
(21) Anmeldenummer: 19194133.5
(22) Anmeldetag: 28.08.2019
(51) Int. Cl.: A01G 17/00, A01G 23/06

(54) **RODEGERÄT, FAHRZEUG ZUR RODUNG VON REBSTÖCKEN UND VERFAHREN ZUR RODUNG VON REBSTÖCKEN**
CLEARANCE DEVICE, VEHICLE FOR CLEARING GRAPEVINE AND METHOD FOR CLEARING GRAPEVINE
APPAREIL DE DÉBROUSSAILLEMENT, VÉHICULE DE DÉBROUSSAILLEMENT DES CEPS DE VIGNE ET PROCÉDÉ DE DÉBROUSSAILLEMENT DES CEPS DE VIGNE

(43) Veröffentlichungstag der Anmeldung: 03.03.2021
(73) Patentinhaber: Seibold, Samuel, 70734 Fellbach (DE)
(72) Erfinder: Seibold, Samuel, 70734 Fellbach (DE)
(74) Vertreter: Witte, Weller und Partner Patentanwälte mbB Stuttgart

(56) Entgegenhaltungen:
- DE-A1- 19 812 134
- GB-A- 859 920
- US-A- 2 505 923
- US-A- 2 747 305

## Beschreibung

Die Erfindung betrifft ein Rodegerät zur Rodung von Rebstöcken, sowie ein Fahrzeug zur Rodung von Rebstöcken und ein Verfahren zur Rodung von Rebstöcken.

Mit zunehmender Lebensdauer eines Weinbergs sinkt in der Regel der Ertrag einzelner Rebstöcke. Die Qualität der Trauben steigt über die Lebensdauer an. Solange der zu erwartende Ertrag den Bewirtschaftungsaufwand überschreitet, werden Weinberge kultiviert. Nach 25 bis 40 Jahren werden Weinberge üblicherweise vollständig gerodet und anschließend wieder angelegt.

Neben dem natürlichen Alterungsprozess der Rebstöcke und des Bodens gibt es auch zunehmend Erkrankungen, die zunächst einzelne Rebstöcke betreffen können. Man spricht dabei von Stockausfällen, wobei ein Rebstock keinen oder nur verminderten Ertrag leistet. Ist ein Rebstock erkrankt, so muss der befallene Rebstock gerodet werden, wobei der Rebstock an den Pflanzstellen samt Wurzeln entfernt wird. Oft kann durch das Entfernen betroffener Rebstöcke eine Verbreitung der Krankheit innerhalb des Weinbergs verhindert werden. Eine durch das Roden einzelner Rebstöcke entstandene Lücke wird oftmals direkt wieder geschlossen, indem ein neuer Rebstock nachgepflanzt wird.

Bei modernen Weinbergen sind die Rebstöcke oft maschinengerecht angelegt, um die maschinelle Bewirtschaftung zu erleichtern. Der Abstand einzelner Rebzeilen beträgt dabei etwa 2 Meter, so dass Fahrzeuge, wie beispielsweise Schmalspurtraktoren oder Erntegeräte, zwischen den Rebzeilen eingesetzt werden können. Die Stockabstände innerhalb der Rebzeilen liegen oft bei 1 Meter bis 1,20 Meter. Die Rebe ist eine rankende Pflanze und benötigt daher eine ständige Unterstützung. Für ein optimales Wachstum ist in der Regel ein Unterstützungsgerüst aus Stecken, Pfählen und Spanndrähten, beispielsweise eine Spaliererziehung, mitentscheidend.

Bei der Rodung einzelner Rebstöcke ist der Einsatz maschineller Geräte zwischen den Rebzeilen trotz des Abstandes schwierig. So können die Fahrzeuge meist nicht frei manövriert werden. Damit benachbarte Rebstöcke und/oder das Unterstützungsgerüst nicht beschädigt werden, muss beim Roden einzelner Rebstöcke deshalb oft auf den Einsatz von Maschinen gänzlich verzichtet werden. Insbesondere Geräte die an Fahrzeugen montiert sind, können aufgrund des Platzmangels nicht optimal platziert und somit nicht eingesetzt werden. Im Stand der Technik sind folgende Vorrichtungen offenbart US 2505 923 A und US 2 747 305 A.

### AUFGABE UND LÖSUNG

Aufgabe der Erfindung ist es, ein Rodegerät bereitzustellen, welches das maschinelle Roden von Gehölz, insbesondere von einzelnen Rebstöcken, ermöglicht, ohne dass dabei benachbarte Rebstöcke und/oder das Unterstützungsgerüst der Rebstöcke beschädigt werden.

Erfindungsgemäß wird zur Lösung dieser Aufgabe ein Rodegerät gemäß Anspruch 1 bereitgestellt, welches über eine Kopplungseinrichtung zur mechanischen Befestigung des Rodegerätes an einem Nutzfahrzeug, insbesondere an einem Traktor, wie beispielsweise einem Schmalspurtraktor oder an anderen Erntegeräten, verfügt. Weiterhin verfügt das Rodegerät über einen um eine Hochachse gegenüber der Kopplungseinrichtung schwenkbaren Ausleger, an dessen distalen Ende ein Greifer mit zwei gegeneinander beweglichen Greifbacken zum Fixieren des Gehölzes vorgesehen ist. Dabei weist eine der zwei Greifbacken eine Greifkontur auf, die in Richtung eines proximalen Endes des Auslegers weist.

Um ein schnelleres Ankoppeln an dem Fahrzeug zu ermöglichen, ist das genannte Rodegerät vorzugsweise dazu ausgebildet, um mittels der Kopplungseinrichtung an sogenannten Schnellkuppeldreiecken und/oder Dreipunkt-Krafthebern, bevorzugt der sogenannten Kategorien 0 bis 3, insbesondere bevorzugt der Kategorien 1 bis 2, befestigt zu werden.

Im Folgenden ist insbesondere auf die Entfernung von Rebstöcken Bezug genommen, da dies die bevorzugte Anwendung des erfindungsgemäßen Rodegeräts ist. Nichtsdestotrotz meint dies auch immer das Roden von Gehölz im Allgemeinen.

Insbesondere zur Rodung von Rebstöcken in Weinbergen mit einem geringen Rebzeilenabstand ermöglicht die Verschwenkbarkeit des Auslegers, dass er ohne ein Manövrieren des Fahrzeuges zwischen Rebstöcken innerhalb einer Rebzeile seitlich des Fahrzeugs platziert werden kann. Durch die Verschwenkbarkeit des Auslegers um die Hochachse ist gewährleistet, dass der Greifer am distalen Ende des Auslegers, also an der dem Fahrzeug abgewandten Seite, an den zu rodenden Rebstöcken platziert werden kann. Durch diese Verschwenkbarkeit kann der Ausleger also links und/oder rechts vom Fahrzeug ausgeschwenkt werden. Der Greifer ist am Ausleger distal zur Schwenkachse angeordnet, so dass der Greifer gemeinsam mit dem Ausleger verschwenkbar ist und somit gleichsam von der Seite an einen zu entfernenden Rebstock herangeführt werden kann.

Der Ausleger weist für die Verschwenkbarkeit zwischen der Hochachse und dem Greifer bevorzugt eine Länge von mindestens 20 cm, bevorzugt von mindestens 40 cm, insbesondere bevorzugt von mindestens 60 cm auf. Insbesondere vorzugsweise ist der Ausleger so lang, dass er bei Ausrichtung seiner Haupterstreckungsachse in Fahrzeugquerrichtung seitlich über das verwendete Nutzfahrzeug hinüberragt.

Abhängig von der Länge des Auslegers kann der Ausleger zur Erzielung einer ausreichenden Stabilität mindestens zwei metallische Streben aufweisen, die dabei vorzugsweise eine in Richtung zum distalen Ende des Auslegers zueinander konvergierende Ausrichtung aufweisen und endseitig mittelbar oder unmittelbar miteinander verbunden sind.

Die Verschwenkbarkeit ermöglicht es auch, dass der Ausleger zwischen einer Transportstellung und einer Arbeitsstellung um die genannte Hochachse verschwenkbar ist. Die Hochachse ist in etwa vertikal ausgerichtet, wobei hiervon auch eine Neigung von bis zu 25° gegenüber der Vertikalen als umfasst angesehen wird.

In der Transportstellung ist die Haupterstreckungsachse des Auslegers vorzugsweise in Fahrzeuglängsrichtung ausgerichtet, so dass der Ausleger bei einer frontseitigen Befestigung am Fahrzeug in Fahrzeuglängsrichtung nach vorne ausgerichtet ist und bei einer rückseitigen Befestigung in Fahrzeuglängsrichtung nach hinten weist. Es sind auch Ausgestaltungen möglich, bei denen der Ausleger in der Transportstellung beim Verfahren des Fahrzeugs angewinkelt zu der Fahrzeugslängsrichtung verläuft, so dass der Ausleger beim Transport an das Fahrzeug angelegt ist, wodurch die Gesamtlänge von Fahrzeug und Rodegerät reduziert werden kann.

Eine beidseitige Verschwenkbarkeit des Auslegers ausgehend von der Transportstellung ermöglicht insbesondere, dass Rebstöcke zweier Rebzeilen auf beiden Seiten des Fahrzeugs erreicht werden können. Es ist aber auch eine einfache Ausgestaltung möglich, bei der der Ausleger nur zu einer Seite des Fahrzeugs verschwenkt werden kann.

Die zwei Greifbacken des Greifers sind so angeordnet, dass sie das Herausziehen des Stammes des Rebstockes aus dem Bereich des Unterstützungsgerüstes in Haupterstreckungsachse des Auslegers ermöglichen. Die Greifbacken sind derart beweglich, dass sie entgegengerichtet fixierend auf den Rebstock einwirken können. Die Greifbacken sind derart angeordnet, dass in einem geöffneten Zustand des Greifers eine Greifbacke von der Schwenkachse aus gesehen hinter dem Rebstock und die andere Greifbacke vor dem Rebstock angeordnet ist. Dies führt mittels der hinteren Greifbacke zu einem Hintergreifen des zu rodenden Rebstockes, während die vordere Greifbacke durch eine zwischen den Greifbacken wirkende Anpresskraft den Rebstock fixieren kann. Entsprechend sind die Greifbacken in etwa im rechten Winkel zu der Haupterstreckungsachse des Auslegers angeordnet und erstrecken sich einseitig oder beidseitig des Auslegers. Die Greifbacken stehen zum Ausleger in Querausrichtung.

Wenngleich die genannte rechtwinklige Ausrichtung zwischen der Haupterstreckungsachse des Auslegers und der Querausrichtung der distalen Greifbacke besonders vorteilhaft ist, sind grundsätzlich auch leicht abweichende Winkel möglich. Besonders bevorzugt ist es, dass der Winkel zwischen 60° und 120° liegt. Bevorzugt sind die Greifbacken zueinander parallel angeordnet, so dass bei der Bewegung der Greifbacken aufeinander zu der zwischen ihnen befindliche Spalt gleichzeitig geschlossen wird.

Die Greifkontur der Greifbacke ist vorzugsweise nicht scharfkantig, so dass der fixierte Rebstock nicht geschnitten wird. Vorzugsweise weisen beide Greifbacken eine Zahnstruktur auf, die bei einer besonders bevorzugten Ausführungsform derart gegenüberliegend angeordnet ist, dass die Greifkonturen ineinandergreifende Zahnflanken aufweisen. Die Greifbacken weisen vorzugsweise eine grundsätzlich gradlinige Kontur auf. Die Greifbacken können auch von einer gradlinigen Kontur abweichen und eine konkave Kontur aufweisen, um den Rebstock hierdurch beim Schließen der Greifbacken in eine definierte Position relativ zum Ausleger zu drücken und dort zu fixieren.

Die Greifkontur weist bevorzugt eine Länge zwischen dem Ausleger und einem äußeren Ende der Greifkontur von mindestens 6 cm, bevorzugt von mindestens 10 cm auf. Bevorzugt ist die Länge der Greifkontur maximal 25 cm.

Bei einer bevorzugten Ausgestaltung des Rodegeräts ist eine der Greifbacken ortsfest am Ausleger vorgesehen, so dass nur die üblicherweise eine andere Greifbacke bewegbar am Ausleger vorgesehen ist. Bei dieser Ausgestaltung kann die distale oder die proximale Greifbacke die bewegliche Greifbacke sein.

Bei einer Ausgestaltung mit nur einer beweglichen Greifbacke ist es bevorzugt, dass die bewegbare Greifbacke die distale Greifbacke ist, also die von der vertikalen Schwenkachse aus hintere Greifbacke. Bevorzugt weist diese Greifbacke die Greifkontur auf, die in Richtung des proximalen Endes des Auslegers weist, um das oben beschriebene Hintergreifen des Rebstockes zu ermöglichen. Bei dieser Ausgestaltung ist die gegenüberliegende ortsfeste Greifbacke derart am Ausleger vorgesehen, dass ihre Greifkontur in Richtung des distalen Endes des Auslegers weist. Durch die Ausgestaltung mit der bewegbaren distalen Greifbacke kann auf besonders einfache Art und Weise erreicht werden, dass der Rebstock beim Fixieren in Richtung der Hochachse des Auslegers herangezogen wird. Hierdurch wird der Rebstock unter einem eventuell vorhandenem Unterstützungsgerüst hervorgezogen, so dass es bei einem anschließenden Herausziehen des Rebstockes aus dem Erdreich nicht zu einer Beschädigung des Unterstützungsgerüsts kommen kann.

Zudem ermöglicht die Ausgestaltung der distalen Greifbacke als bewegliche Greifbacke einen unkomplizierten Aufbau, da die distale Greifbacke an einer Greifbackenstange angebracht sein kann, welche ihrerseits teleskopierbar in einer in Haupterstreckungsachse ausgerichteten Strebe des Auslegers angeordnet werden kann. Die Strebe dient damit als Führung für die Greifbacke.

Durch die beschriebene Ausgestaltung mit der distalen beweglichen Greifbacke ist außerdem der Aufbau des Rodegeräts besonders kompakt. Die distale Greifbacke kann in einer Staulage sowie in der Transportstellung in eine proximale Position verfahren werden, so dass die Länge vom Ausleger mitsamt Greifer minimiert werden kann.

Die bewegbare Greifbacke ist vorzugsweise translativ in Richtung der Haupterstreckungsachse des Auslegers bewegbar. Zur Bewegung der bewegbaren Greifbacke ist vorzugsweise ein Hydraulikzylinder oder ein Pneumatikzylinder vorgesehen, wobei der Zylinder vorzugsweise in Richtung der Haupterstreckungsachse des Auslegers ausgerichtet ist. Bevorzugt ist der Zylinder in einem Hohlraum des Auslegers angeordnet. Der Zylinder ist bevorzugt einerseits mit dem Ausleger und andererseits einer der Greifbacken wirkverbunden, so dass die hierdurch angetriebene Greifbacke translativ gegenüber der anderen Greifbacke verfahrbar ist.

Alternativ zu einer Ausgestaltung mit einer ortsfesten Greifbacke am Ausleger können auch beide Greifbacken beweglich am Ausleger vorgesehen sein. In einem solchen Falle sind vorzugsweise getrennte Zylinder zum Antreiben der unterschiedlichen Greifbacken vorgesehen.

Das Rodegerät verfügt vorzugsweise über ein Schwenkgelenk, dessen Schwenkachse die Hochachse bildet, wobei das Schwenkgelenk vorzugsweise in fester Relativlage zur Kopplungseinrichtung vorgesehen ist, so dass bei Relativverlagerung der Kopplungseinrichtung relativ zum Fahrzeug die Hochachse in gleichem Maße mitbewegt, beispielsweise verkippt, wird.

Das Schwenkgelenk ist vorzugsweise mittig an der Kopplungseinrichtung vorgesehen. Bei einer alternativen Ausgestaltung kann das Schwenkgelenk zu einer der Seiten, also asymmetrisch zur Kopplungseinrichtung angeordnet sein. Durch ein solches seitlich angeordnetes Schwenkgelenk ist das Rodegerät in der Transportstellung oder in der Staulage besonders kompakt.

Es ist möglich, dass das Verschwenken des Auslegers manuell erfolgt und hierfür kein Motor oder anderer Antrieb vorgesehen ist. In einem solchen Fall wird zunächst das Fahrzeug passend positioniert und anschließend der Ausleger manuell verschwenkt, um dann in der verschwenkten Stellung die Greifbacken in eine Greifstellung zu verfahren. Insbesondere bei einem Greifer, bei dem beide Greifbacken entlang des Auslegers verfahrbar sind, kommt eine solche manuelle Schwenkbarkeit in Frage.

Bevorzugt ist es allerdings, wenn für das Verschwenken des Auslegers eine durch Druckluft, Elektrizität oder Hydraulikflüssigkeit betriebene Antriebseinheit vorgesehen ist. Durch die Antriebseinheit kann der Ausleger, beispielsweise vom Fahrzeug aus oder durch eine externe Steuereinheit, verschwenkt werden.

Zur Schwenkverlagerung des Auslegers gegenüber der Kopplungseinrichtung ist insbesondere vorzugsweise mindestens ein Antriebszylinder, insbesondere ein Hydraulikzylinder oder ein Pneumatikzylinder, vorgesehen.

Für die Ausgestaltung mit einem Ausleger, der zu beiden Seiten des Fahrzeugs verschwenkbar ist, ist es bevorzugt, dass es sich bei der Antriebseinheit um einen Hydraulikzylinder handelt. Dieser Hydraulikzylinder ist vorzugsweise oberhalb vom Schwenkgelenk angeordnet, so dass er den Ausleger verschwenken kann. Der Hydraulikzylinder kann insbesondere ein Hydraulik-Drehzylinder sein, der ein Drehmoment durch eine Linearbewegung eines Kolbens über eine Zahnstange auf den Ausleger erzeugt.

Bei einer alternativen Ausgestaltung kann es sich bei der Antriebseinheit beispielsweise um einen schwenkbar angelenkten Hydraulikzylinder handeln. Dieser schwenkbar angelenkte Hydraulikzylinder kann über einen Hebel mit dem Ausleger verbunden sein, so dass eine Kraftbeaufschlagung des Hebels zur unmittelbaren Verschwenkung des Auslegers führt.

Die Antriebseinheit ist vorzugsweise mit einem fahrzeugseitigen Anschluss verbunden, wodurch er vom Fahrzeug aus mit Energie versorgt werden kann. Beispielsweise kann es sich bei dem Anschluss um einen Hydraulikanschluss, Pneumatikanschluss oder um einen elektrischen Anschluss handeln, der über Schläuche bzw. Kabel mit entsprechenden Versorgungsanschlüssen am Fahrzeug verbunden ist. Alternativ kann die Antriebseinheit mit einer Zapfwelle des Fahrzeugs verbunden werden. Über die Verbindung der Zapfwelle kann unmittelbar mechanisch das Rodegerät oder eine rodegerätseitige Hydraulikanlage zur Druckerzeugung betrieben werden.

Anstelle eines Antriebszylinders zur Schwenkverlagerung des Auslegers gegenüber der Kopplungseinrichtung kann bei einer alternativen Ausgestaltung als Antriebseinheit mindestens ein rotativer Antriebsmotor vorgesehen sein, insbesondere ein Hydraulikmotor oder ein Elektromotor, insbesondere ein Getriebemotor mit einer Untersetzung.

Bei einer nicht erfindungsgemäßen Ausgestaltung sind die Greifbacken bevorzugt zu der Haupterstreckungsachse des Auslegers derart angeordnet, dass sie sich nur an einer Seite des Auslegers seitlich erstrecken. Das ist vor allem dann vorteilhaft, wenn nur ein einseitiges Verschwenken des Auslegers vorgesehen ist, beispielsweise in Kombination mit der beschriebenen asymmetrisch angeordneten Schwenkachse.

Bei der erfindungsgemäßen Ausgestaltung weist das Rodegerät auf einander gegenüberliegenden Seite des Auslegers jeweils zwei Greifbacken mit jeweils einer Greifkontur auf, die sich jeweils seitlich erstrecken. Vorzugsweise bilden jeweils zwei Greifbacken beidseitig des Auslegers einen Teil eines gemeinsamen Greifbackenbauteils, welches als Ganzes verlagerbar ist. Es ist also bevorzugt, dass jeweils die bewegbaren Greifbacken gemeinsam bewegbar sind, so dass diese von einem gemeinsamen Zylinder bewegbar sind. Die Greifbacken auf gegenüberliegenden Seiten des Auslegers sind bevorzugt einstückig als ein Greifbackenbauteil ausgebildet, so dass sich jeweils ein beidseitiges distales und eine beidseitiges proximales Greifbackenbauteil seitlich vom Ausleger erstreckt.

Die Erfindung betrifft weiterhin ein Fahrzeug, beispielsweise einen Traktor, insbesondere vom Typ Schmalspurtraktor oder Erntegerät, zur Rodung von von Rebstöcken. Das Fahrzeug verfügt über eine fahrzeugseitige Kopplungseinrichtung zur Anbringung einer fallweise anbaubaren Vorrichtung sowie über ein hieran anbaubares Rodegerät vorbeschriebener Art.

Um ein schnelleres Ankoppeln der Anbaugeräte zu ermöglichen, verfügt das Fahrzeug bevorzugt über ein Schnellkuppeldreieck oder einen Dreipunkt-Kraftheber, bevorzugt der Kategorien 0 bis 3, insbesondere bevorzugt der Kategorien 1 bis 2. Typischerweise umfasst eine solche fahrzeugseitige Kopplungseinrichtung einen Oberlenker und zwei Unterlenker. Solche Unterlenker verfügen über freie Enden, welche zwei untere Aufhängungspunkte einer Dreipunkt-Aufhängung bilden. Weiter oberhalb der Unterlenker ist mittig der Oberlenker angebracht, der über einen weiteren Aufhängungspunkt verfügt. Die Aufhängungspunkte der Ober- und Unterlenker werden häufig als Fanghaken ausgeführt. Das ermöglicht ein schnelleres Ankoppeln der anbaubaren Vorrichtung. Üblicherweise ist über den Oberlenker eine Verstellung einer Neigung der anbaubaren Vorrichtung möglich, so dass die anbaubare Vorrichtung vorzugsweise schwenkbar gegenüber einem Chassis des Fahrzeuges angebracht ist. Die anbaubareVorrichtung kann bei einer alternativen Funktion der fahrzeugseitigen Kopplungseinrichtung neben oder anstatt der Verstellbarkeit des Oberlenkers allein auch eine Verstellbarkeit in ihrer Gesamtheit umfassen, wodurch die anbaubare Vorrichtung anhebbar ist und damit auch schwenkbar gegenüber dem Chassis des Fahrzeuges angebracht ist.

Das Rodegerät ist im betriebsbereiten Zustand mit seiner vorrichtungsseitigen Kopplungseinrichtung mit der genannten fahrzeugseitigen Kopplungseinrichtung gekoppelt. Neben dieser mechanischen Kopplung ist das Rodegerät üblicherweise auch mit mindestens einem fahrzeugseitigen Anschluss verbunden, wodurch es vom Fahrzeug aus mit Energie versorgt werden kann. Hierdurch kann insbesondere der genannte Zylinder der bewegbaren Greifbacken gesteuert werden. Bei einer Ausgestaltung des Rodegeräts mit der Antriebseinheit zur Erzielung der Schwenkbeweglichkeit ist es bevorzugt, dass auch dieses über das Fahrzeug gesteuert werden kann.

Die Erfindung betrifft weiterhin ein Verfahren zur Rodung eines Rebstocks, wobei das Verfahren unter Verwendung des beschriebenen Rodegeräts durchgeführt wird.

In einem ersten Schritt wird das Rodegerät mittels des Fahrzeugs in die Nähe des zu rodenden Rebstockes verbracht, beispielsweise zwischen zwei Rebzeilen eines Weinberges. Das Rodegerät ist mechanisch mit seiner Kopplungseinrichtung an der Kopplungseinrichtung des Fahrzeugs gekoppelt. Wenn das Fahrzeug am zu rodenden Rebstock positioniert ist, wird durch Verschwenken des Auslegers der Greifer relativ zum Rebstock in eine Greifposition verbracht, in der die Greifbacken beidseitig eines Stammes des Rebstockes angeordnet sind, wobei eine Greifbacke in Haupterstreckungsachse des Auslegers hinter dem Stamm und eine Greifbacke vor dem Stamm positioniert ist.

Anschließend werden die Greifbacken relativ zueinander verlagert, so dass sie sich beidseitig an einem Stamm des Rebstockes anlegen, wobei eine der Greifbacken aus Perspektive des Fahrzeugs hinter dem Stamm des Rebstockes positioniert ist. Die aufeinander zu bewegten Greifbacken wirken entgegengerichtet fixierend auf den Rebstock ein.

Wenn der Rebstock von einem Unterstützungsgerüst umgeben ist, wird er vorzugsweise zunächst darunter hervorgezogen. Dies erfolgt mittels der distalen Greifbacke, deren Greifkontur in proximale Richtung weist. Dies kann insbesondere dadurch geschehen, dass die Greifbacke relativ zum Ausleger verfahren wird und den Rebstock dadurch in Richtung des Fahrzeugs zieht. Alternativ kann das Fahrzeug selbst und damit die distale Greifbacke ein Stück bewegt werden oder der Ausleger seitlich verschwenkt werden, um den Rebstock unter dem Unterstützungsgerüst hervorzuziehen.

Zur Entfernung des Rebstockes mitsamt seinem Wurzelwerk aus dem Erdreich gibt es anschließend weiterhin mehrere Möglichkeiten. Zum einen kann dies durch eine Verlagerung des Fahrzeugs geschehen, wodurch der Rebstock aus dem Erdreich entfernt wird. Alternativ oder zusätzlich zur reinen Verlagerung des Fahrzeugs kann durch gemeinsames Verlagern der Greifbacken gegenüber dem Ausleger eine Kraftbeaufschlagung des Stammes erfolgen, so dass der Rebstock mitsamt Wurzelwerk aus dem Erdreich entfernt wird. Zusätzlich zu einer dieser beiden vorgenannten Möglichkeiten kann zur Rodung des Rebstockes der Ausleger nach Anlegen der Greifbacken am Stamm mittels der Bewegbarkeit der fahrzeugseitigen Kupplungseinrichtung gegenüber dem Chassis des Fahrzeugs verschwenkt, insbesondere angehoben oder geneigt werden, so dass der Greifer mit dem Stamm angehoben wird und somit der Rebstock aus dem Erdreich mitsamt Wurzelwerk entfernt wird.

Das Verfahren findet insbesondere Verwendung zur Entfernung schadhafter Rebstöcke, insbesondere von Rebstöcken, die von der Esca-Krankheit befallen sind, wobei in der Regel einzelne Rebstöcke innerhalb eines Weinberges entfernt werden.

Da ein solcher sogenannter Stockausfall zu einem verminderten Ertrag führt, wird in der Regel die entstandene Lücke anschließend wieder gefüllt, indem ein neuer Rebstock nachgepflanzt wird. Durch das Entfernen des Rebstockes mitsamt seinem Wurzelwerk kann das entstandene Loch im Erdreich als Pflanzloch ohne weitere Verfahrensschritte verwendet werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Rodegerät mit einer Kopplungseinrichtung und ein Fahrzeug zur Führung des Rodegeräts.
Fig. 2a zeigt ein erstes Ausführungsbeispiel des Rodegeräts in einer Stauposition.
Fig. 2b zeigt das erste Ausführungsbeispiel des Rodegeräts mit geöffnetem Greifer.
Fig. 3 zeigt die Verschwenkbarkeit des Auslegers des ersten Ausführungsbeispiels von oben.
Fig. 4 zeigt das erste Ausführungsbeispiel in einer Schnittdarstellung von der Seite.
Fig. 5 zeigt ein zweites, nicht erfindungsgemäßes Beispiel des Rodegeräts.
Fig. 6 zeigt die Verschwenkbarkeit des Auslegers des zweiten nicht erfindungsgemäßen Beispiels von oben.
Fig. 7A bis 7F zeigen einen Ablauf des Verfahrens, bei dem das Rodegerät zum Roden eines Weinstocks verwendet wird.

### DETAILLIERTE BESCHREIBUNG DER AUSFÜHRUNGSBEISPIELE

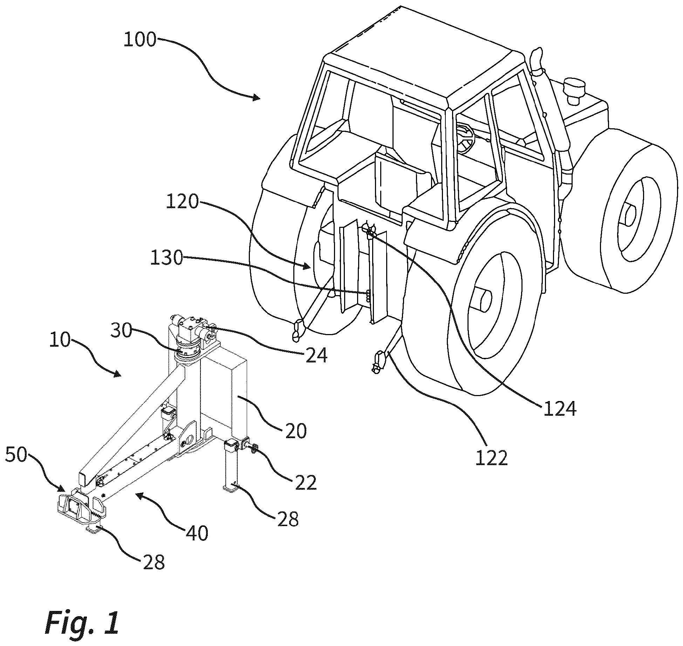

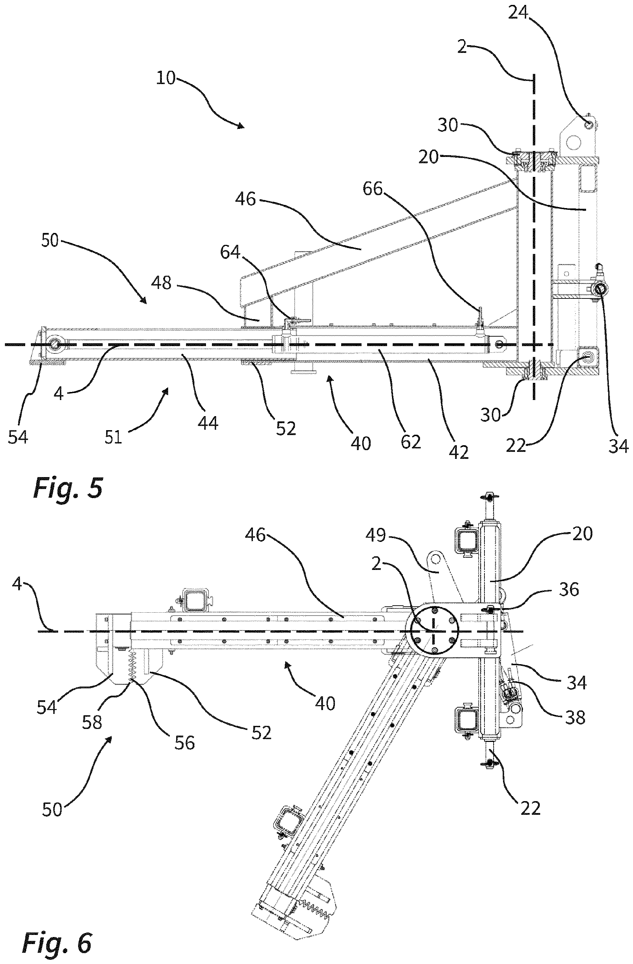

Fig. 1 bis 4 zeigen ein erstes Ausführungsbeispiel eines Rodegeräts 10 zur Rodung von Gehölz, insbesondere von Rebstöcken 70. In Fig. 1 ist das Rodegerät 10 neben einem Fahrzeug 100 dargestellt, an welches es ankoppelbar ist. Das Rodegerät 10 verfügt über eine Kopplungseinrichtung 20, über welche das Rodegerät 10 bestimmungsgemäß an einer fahrzeugseitigen Kopplungseinrichtung 120 anzukoppeln ist. Ebenso wie dieses Ausführungsbeispiel eines Rodegeräts 10 kann auch dessen zweite Ausgestaltung der Fig. 5 und 6 an dem Fahrzeug 100 angekoppelt werden.

Die Kopplungseinrichtung 20 des Rodegeräts 10 ist für eine mechanische Befestigung an einem fahrzeugseitigen Dreipunkt-Kraftheber vorgesehen. Zu diesem Zweck weist die Kopplungseinrichtung 20 unten jeweils zwei seitliche Kopplungsbolzen 22 und einen oberen mittigen Kopplungsbolzen 24 auf. Diese Kopplungsbolzen 22, 24 sind derart angeordnet, dass sie fahrzeugseitig in dafür vorgesehene Aufnahmen ankoppelbar sind. Die als Dreipunkt-Kraftheber ausgebildete fahrzeugseitige Kopplungseinrichtung 120 umfasst einen mittigen Oberlenker 124 und zwei seitliche Unterlenker 122. Die Unterlenker 122 verfügen über freie Enden, welche jeweils eine untere Aufnahme der Dreipunkt-Aufhängung bilden. Oberhalb der Unterlenker 122 ist mittig der Oberlenker 124 angebracht, der eine weitere Aufnahme bildet. Die Aufnahmen sind in diesem Ausführungsbeispiel als Fanghaken ausgebildet, um ein schnelles Ankoppeln und Abkoppeln des Rodegeräts 10 zu ermöglichen. Der Oberlenker 124 verfügt über eine nicht dargestellte Vorrichtung zur Verstellung einer Neigung der oberen und unteren Aufnahmen zueinander, wodurch das Rodegerät 10 im angekoppelten Zustand geneigt werden kann. Die Kopplungseinrichtung 120 des Fahrzeugs 100 verfügt weiterhin über Anschlüsse 130 für Hydraulikgeräte.

Das Rodegerät 10 verfügt über einen Ausleger 40, der schwenkbar an der Kopplungseinrichtung 20 angelenkt ist. Der Ausleger 40 ist somit um eine Hochachse 2 gegenüber der Kopplungseinrichtung 20 verschwenkbar. ZurVerschwenkbarkeit des Auslegers 40 verfügt das Rodegerät 10 über ein Schwenkgelenk 30, dessen Schwenkachse die Hochachse 2 bildet. Der Ausleger 40 ist in diesem Ausführungsbeispiel von einer Transportstellung aus zu beiden Seiten, also nach rechts und links in eine Arbeitsstellung verschwenkbar.

Am distalen Ende des Auslegers 40 verfügt das Rodegerät 10 über einen Greifer 50 mit zwei gegeneinander beweglichen Greifbacken 52, 54 zum Fixieren von Rebstöcken 70 oder anderweitigem Gehölz. Der Greifer 50 ist distal zur Hochachse 2 am Ausleger 40 angeordnet, so dass er gemeinsam mit dem Ausleger 40 verschwenkbar ist. Durch diese Verschwenkbarkeit kann der Greifer 50 an einen zu entfernenden Rebstock 70 herangeführt werden.

Die Greifbacken 52, 54 sind derart angeordnet, dass in einem geöffneten Zustand des Greifers 50 eine Greifbacke 54 von der Hochachse 2 aus gesehen hinter dem Rebstock 70 und die andere Greifbacke 52 vor dem Rebstock 70 angeordnet werden kann. Insbesondere um dieses Hintergreifen durch die hintere Greifbacke 54 zu erleichtern, sind die Greifbacken 52, 54 im rechten Winkel zu einer Haupterstreckungsachse 4 des Auslegers 40 angeordnet. Die Greifbacken 52, 54 haben also eine Querausrichtung zum Ausleger 40.

Die Greifbacken 52, 54 verfügen jeweils über eine Greifkontur 56, 58, die derart zueinander parallel angeordnet sind, so dass bei einer Bewegung der Greifbacken 52, 54 aufeinander zu der zwischen ihnen befindliche Spalt gleichzeitig geschlossen wird. Die Greifkonturen 56, 58 der Greifbacken 52, 54 weisen in diesem Ausführungsbeispiel eine Zahnstruktur auf, die derart gegenüberliegend angeordnet ist, dass die Greifkonturen 56, 58 ineinander greifende Zahnflanken aufweisen. Die Greifkonturen 56, 58 weisen eine Länge zwischen dem Ausleger 40 und einem äußeren Ende der Greifkonturen 56, 58 von etwa 12 cm auf. Der Ausleger 40 weist zwischen der Hochachse 2 und dem distalen Ende des geschlossenen Greifers 50 eine Länge etwa 90 cm bis 100 cm auf.

Das Rodegerät 10 ist in Fig. 1 in einer Stauposition dargestellt, also nicht am Fahrzeug 100 angekoppelt. Es ist in dieser Stauposition auf drei verstellbaren Standfüßen 28 auf dem Boden abgestellt. Diese Standfüße 28 sind derart verfahrbar, so dass sie im an das Fahrzeug 100 angekoppelten Zustand des Rodegeräts 10 in eine Koppelposition überführt werden können.

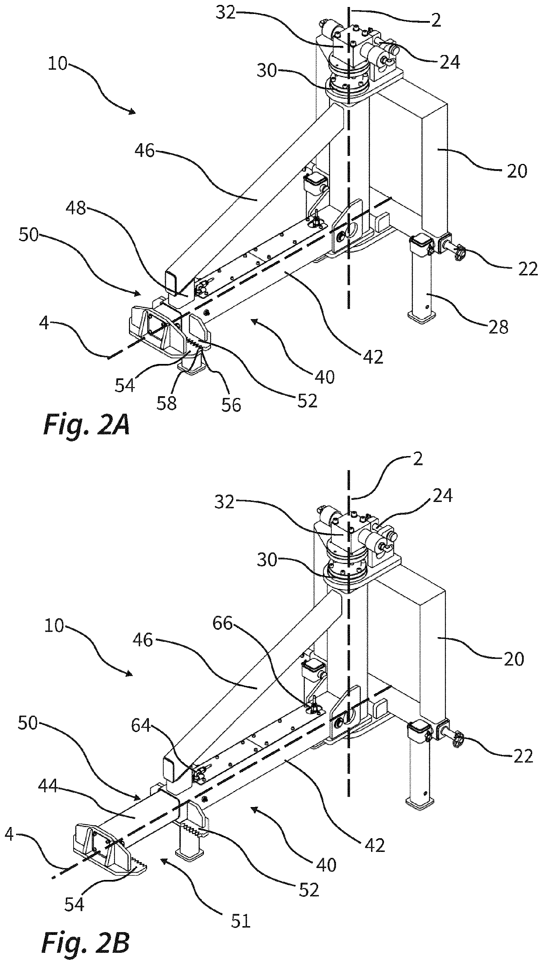

Die Fig. 2A und 2B zeigen das Rodegerät 10 der Fig. 1 im Detail. Besonders die Beweglichkeit der zwei Greifbacken 52, 54 zum Zwecke des Ergreifens des Rebstockes 70 ist in den Figuren 2A und 2B verdeutlicht. Fig. 2A zeigt den Greifer 50 in einer geschlossenen Position und Fig. 2B zeigt den Greifer 50 in einer geöffneten Position, in der Greifbacken 52, 54 beidseitig eines Greifbereichs 51 angeordnet sind.

Zur Erzielung einer ausreichenden Stabilität des Auslegers 40 verfügt der Ausleger 40 über zwei metallische Streben 42, 46, welche in Richtung des distalen Endes des Auslegers 40 zueinander konvergierend ausgerichtet sind und endseitig mittelbar über ein Zwischenstück 48 miteinander verbunden sind.

Der Ausleger 40 ist in den Fig. 2A und 2B in der Transportstellung ausgerichtet. In diesem Ausführungsbeispiel ist die Transportstellung eine Stellung des Auslegers 40, in der dessen Haupterstreckungsachse 4 in Fahrzeuglängsrichtung des Fahrzeugs 100 weist. Die Hochachse 2 ist vertikal ausgerichtet und bezogen auf die Fahrzeugquerrichtung zentriert an der Kopplungseinrichtung 20 vorgesehen. Andere Positionen der Hochachse 2 werden bezüglich einer zweiten Ausführungsform im Weiteren noch erläutert.

Für das Verschwenken des Auslegers 40 ist eine Antriebseinheit vorgesehen. Die Antriebseinheit ist vorliegend als querliegender Antriebszylinder 32 ausgebildet. Der Antriebszylinder 32 verfügt über zwei Hydraulikanschlüsse 36, 38, die an fahrzeugseitige Anschlüsse 130 für Hydraulikgeräte anschließbar sind. Der Antriebszylinder 32 ist in diesem Ausführungsbeispiel als Hydraulik-Drehzylinder ausgebildet. Dieser erzeugt ein Drehmoment über eine Linearbewegung eines nicht gezeigten Kolbens, welcher auf einer nicht dargestellten Zahnstange auf ein Ritzel am Ausleger 40 übertragen wird.

Die proximale Greifbacke 52 ist ortsfest am Ausleger 40 vorgesehen, während die distale Greifbacke 54 translativ bewegbar am Ausleger 40 vorgesehen ist. Durch die Ausgestaltung mit der distalen beweglichen Greifbacke 54 kann auf besonders einfache Art und Weise erreicht werden, dass der Rebstock 70 beim Fixieren seines Stammes 72 zwischen den Greifbacken 52, 54 in Richtung der Hochachse 2 des Auslegers 40 gezogen wird. Durch dieses Heranziehen kann der Rebstock 70 unter einem eventuell vorhandenen Unterstützungsgerüst 80 hervorgezogen werden, so dass dieses beim Roden des Rebstockes 70 nicht beschädigt wird.

Zur angetriebenen Bewegung der bewegbaren Greifbacke 54 ist ein in den Fig. 2A und 2B nicht dargestellter Hydraulikzylinder 62 in einem Hohlraum der unteren Strebe 42 des Auslegers 40 vorgesehen. Der Hydraulikzylinder 62 ist in Richtung der Haupterstreckungsachse 4 des Auslegers 40 ausgerichtet. Der Hydraulikzylinder 62 ist einerseits mit der unteren Strebe 42 und andererseits mit der Greifbacke 54 wirkverbunden, so dass die hierdurch angetriebene Greifbacke 54 translativ gegenüber der feststehenden Greifbacke 52 verfahrbar ist. Der Hydraulikzylinder 62 verfügt über zwei Hydraulikanschlüsse 64, 66, die an den fahrzeugseitigen Anschlüsse 130 für eine Hydraulik anschließbar sind.

Die untere Strebe 42 des Auslegers 40 ist in diesem Ausführungsbeispiel als Teleskopstange ausgebildet. Innerhalb der Strebe 42 ist eine Greifbackenstange 44 angeordnet. Am äußeren Ende der Greifbackenstange 44 ist die Greifbacke 54 angeordnet. Die Greifbackenstange 44 kann mittels des Hydraulikzylinders 62 entlang der Haupterstreckungsachse 4 des Auslegers 40 verfahren werden.

Die Fig. 1 bis 4 zeigen eine bevorzugte Ausgestaltung des Rodegeräts 10, bei welcher der Ausleger 40 auf gegenüberliegenden Seiten jeweils zwei Greifbacken 52, 54 aufweist, die sich jeweils seitlich des Auslegers 40 und in etwa in einem rechten Winkel hierzu erstrecken. Die Greifbacken 52, 54 erstrecken sich also in diesem Ausführungsbeispiel beidseitig des Auslegers 40. Jeweils zwei Greifbacken 52, 54 beidseitig des Auslegers 40 bilden einen Teil einer gemeinsamen einstückigen Greifbackeneinheit, welche als Ganzes verlagerbar ist. Die jeweils bewegbare Greifbacke 54 ist also bei dieser Ausgestaltung gemeinsam von dem Hydraulikzylinder 62 bewegbar.

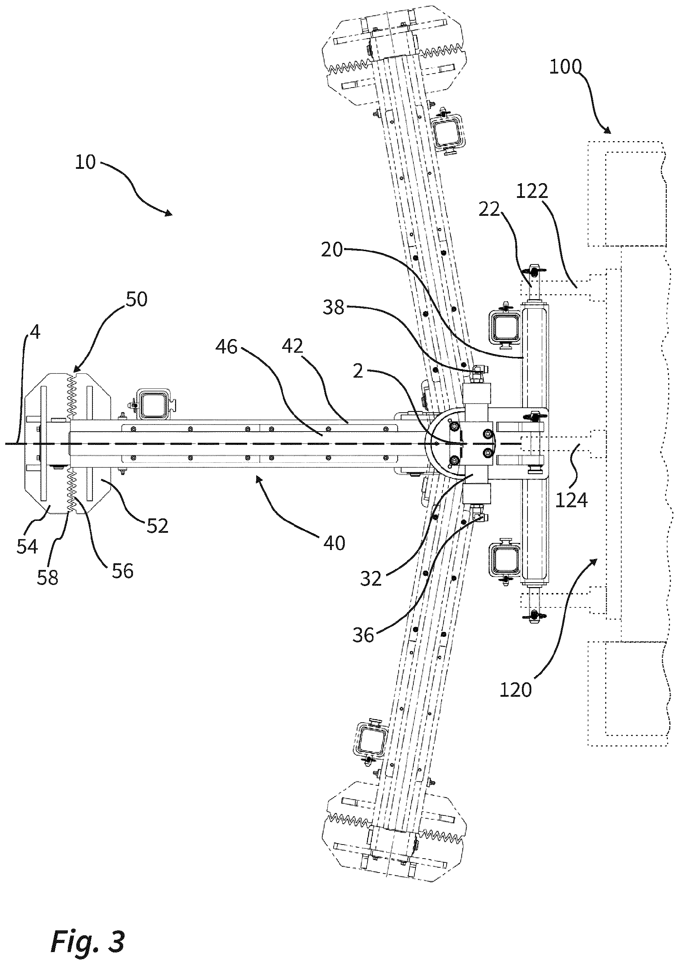

Fig. 3 zeigt das Rodegerät 10 der Fig. 1, 2A und 2B in einer Draufsicht. Verdeutlicht wird in dieser Darstellung die Verlagerbarkeit des Auslegers 40, welche insbesondere zum Heranschwenken des Greifers 50 an einen Rebstock 70 Verwendung findet.

Das Rodegerät 10 ist in dieser Figur am angedeuteten Fahrzeug 100 angekoppelt. Die Unterlenker 122 des Fahrzeugs 100 sind mit den unteren Kopplungsbolzen 22 verbunden und der Oberlenker 124 ist mit dem oberen Kopplungsbolzen 24 des Rodegeräts 10 verbunden.

Der Ausleger 40 ist um die Hochachse 2 beidseitig verschwenkbar, so dass der Greifer 50 über eine Breite des Fahrzeugs 100 hinaus verschwenkt werden kann. Durch diese Verschwenkbarkeit können die Rebstöcke 70 innerhalb von Rebzeilen beidseitig des Fahrzeugs 100 besonders einfach erreicht werden.

Bei diesem Ausführungsbeispiel ist der Ausleger 40 um bis zu etwa 80° ausgehend von der Transportstellung nach rechts und links verschwenkbar. Es sind andere Ausgestaltungen denkbar, bei denen die Kopplungseinrichtung 20 derart ausgebildet ist, dass der Ausleger 40 um mehr als 80°, beispielsweise 90° oder 120°, verschwenkt werden kann.

Oberhalb vom Schwenkgelenk 30 des Auslegers 40 ist der Antriebszylinder 32 angeordnet, mittels dessen der Ausleger40 hydraulisch verschwenkbar ist.

In dieser Draufsicht sind die zu einer gemeinsamen einstückigen Greifbackeneinheit zusammengefassten Greifbacken 52, 54 aus den Fig. 1 bis 2B gut zu erkennen. Die Greifkonturen 56, 58 der Greifbacken 52, 54 mit ihren ineinander greifenden Zahnflanken sind in der Draufsicht ebenfalls gut zu sehen.

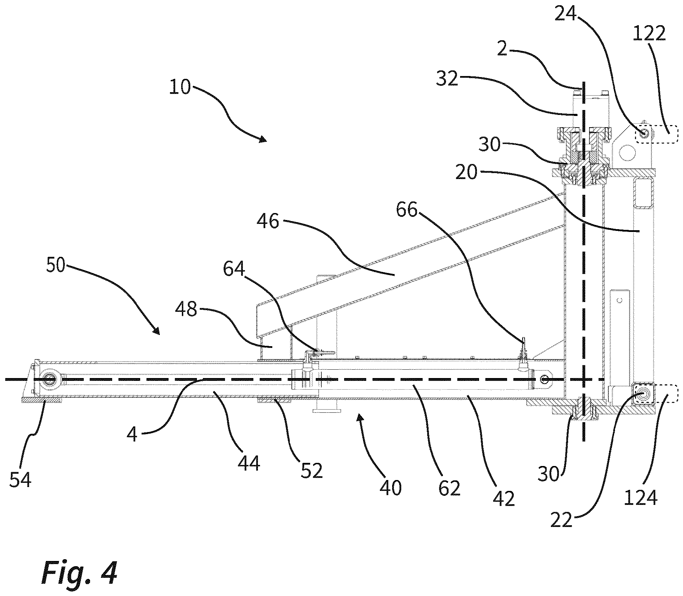

Fig. 4 zeigt das Rodegerät 10 der Fig. 1 bis 3 in einer seitlichen Schnittdarstellung. Die Schnittebene verläuft in dieser Darstellung mittig durch den Ausleger 40, so dass der Hydraulikzylinder 62 im Hohlraum der unteren Strebe 42 mit den Hydraulikanschlüssen 64, 66 zu erkennen ist.

Der Greifer 50 ist in der geöffneten Position dargestellt, so dass die Greifbacken 52, 54 voneinander beabstandet sind und zwischen ihnen der genannte Greifbereich 51 gebildet wird. Hier wird der Rebstock 70 zum Zwecke des Entfernens aus der Erde positioniert.

Der Hydraulikzylinder 62 ist derart in der unteren Strebe 42 des Auslegers 40 ausgerichtet, dass die distale Greifbacke 54 an der Greifbackenstange 44 entlang der Haupterstreckungsachse 4 gegenüber der feststehenden Greifbacke 52 verfahrbar ist.

Das Rodegerät 10 ist an das nicht dargestellte Fahrzeug 100 angekoppelt. Lediglich die Unterlenker 122 und Oberlenker 124 des Fahrzeugs 100 sind in den Figuren angedeutet.

Die Fig. 5 und 6 zeigen ein zweites, nicht erfindungsgemäßes Beispiel des Rodegeräts 10. Funktionelle Bestandteile dieses Beispiels stimmen mit dem ersten Ausführungsbeispiel überein, soweit sie nicht im Weiteren anders beschrieben sind.

Übereinstimmend mit dem ersten Ausführungsbeispiel verfügt das Rodegerät 10 in diesem zweiten Beispiel über die Kopplungseinrichtung 20, welche über die Kopplungsbolzen 22, 24 an dem Fahrzeug 100 ankoppelbar ist. Der Ausleger 40 verfügt über das Schwenkgelenk 30 und ist um die Hochachse 2 gegenüber der Kopplungseinrichtung 20 schwenkbar.

Der Greifer 50 ist in der geöffneten Position dargestellt, so dass sich zwischen den Greifbacken 52 und 54 der Greifbereich 51 ergibt. Auch in diesem Beispiel ist die distale Greifbacke 54 die angetrieben Greifbacke 54 und die proximale Greifbacke 53 ist die ortsfeste Greifbacke 52.

Anders als beim ersten Ausführungsbeispiel umfasst die Antriebseinheit für die Verschwenkbarkeit des Auslegers 40 in diesem Beispiel einen mit beiden Enden schwenkbar angelenkten Hydraulikzylinder 34. Der Hydraulikzylinder 34 ist mit dem Ausleger 40 über einen Hebel 49 verbunden. Mit dem gegenüberliegenden Ende ist er schwenkbar an der Kopplungseinrichtung 20 angelenkt. Durch ein Ausfahren bzw. Einfahren des Hydraulikzylinders 34 kann der Ausleger 40 verschwenkt werden. Durch diesen Aufbau der Antriebseinheit ergibt sich der in Fig. 6 dargestellte einseitige Schwenkbereich des Auslegers 40. Der Ausleger 40 ist also von der Transportstellung aus nur in eine Richtung in eine Arbeitsstellung verschwenkbar. In Fig. 6 ist der Ausleger 40 um 60° verschwenkt dargestellt. Anhängig von der Positionierung des Schwenkgelenks 30 gegenüber der Kopplungseinrichtung 20 und derAusgestaltung der einzelnen Komponenten ist dieser Schwenkbereich erweiterbar.

Ebenfalls abweichend vom ersten Ausführungsbeispiel sind bei diesem Beispiel die Greifbacken 52, 54 nur einseitig vorgesehen. Die Greifbacken 52, 54 erstrecken sich auch bei dieser Gestaltung in einem rechten Winkel zur Haupterstreckungsachse 2 des Auslegers 40. Eine solche einseitige Gestaltung der Greifbacken 52, 54 ist im Falle der einseitigen Verschwenkbarkeit des Auslegers 40 vorteilhaft, da der Ausleger 40 ohnehin nicht in die andere Richtung verschwenkt werden kann. Davon abgesehen ist diese Gestaltung der Greifbacken 52, 54 aber auch mit einem beidseitig verschwenkbaren Ausleger 40 entsprechend dem ersten Ausführungsbeispiel kombinierbar.

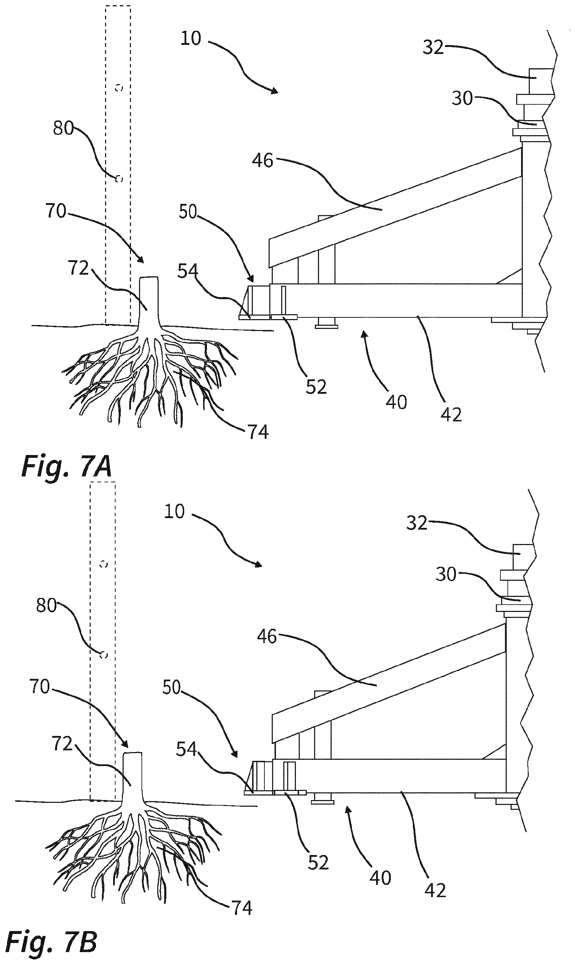

Die Fig. 7A bis 7F verdeutlichen die einzelnen Schritte des Verfahrens zur Rodung von Gehölz, insbesondere von Rebstöcken 70, unter Verwendung des Rodegeräts 10.

Die Fig. 7A zeigt das Rodegerät 10 des ersten Ausführungsbeispiels gemäß den Fig. 1 bis 4 während eines Rodevorgangs. Mittels des nicht dargestellten Fahrzeugs 100 wird das Rodegerät 10 zunächst in die Nähe eines zu rodenden Rebstockes 70 verfahren. Der Stamm 72 des Rebstocks 70 wurde zur Vorbereitung auf ca. 20 cm Länge über dem Erdreich gekürzt. Der Rebstock 70 ist noch fest mit seinem Wurzelwerk 74 im Erdreich verankert. Der Rebstock 70 ist unter einem angedeutet Unterstützungsgerüst 80 platziert.

In Fig. 7B ist dargestellt, dass der Ausleger 40 mittels des Antriebszylinders 32 verschwenkt wird. An diesen Schritt anschließend wird mittels des Hydraulikzylinders 62 die distale Greifbacke 54 des Greifers 50 entlang der Haupterstreckungsachse 4 des Auslegers 40 ausgefahren.

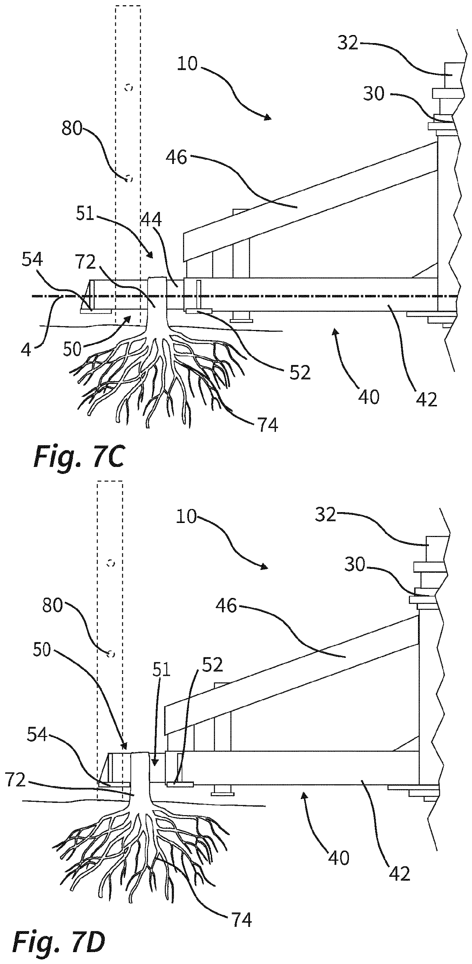

In Fig. 7C ist der Ausleger 40 derart zurück verschwenkt, so dass die distale Greifbacke 54 hinter dem Stamm 72 des Rebstockes 70 platziert ist. Der Greifer 50 ist noch im geöffneten Zustand dargestellt. Der Ausleger40 ist nun teilweise unter dem Unterstützungsgerüst 80 positioniert.

Fig. 7D zeigt, wie die distale Greifbacke 54 in Richtung der ortsfesten Greifbacke 52 zum Fixieren des Stammes 72 zurückgefahren wird. Die Greifbacken 52, 54 fixieren den Stamm 72 in diesem Stadium noch nicht, da lediglich die distale Greifbacke 54 in Kontakt mit dem Stamm 72 ist.

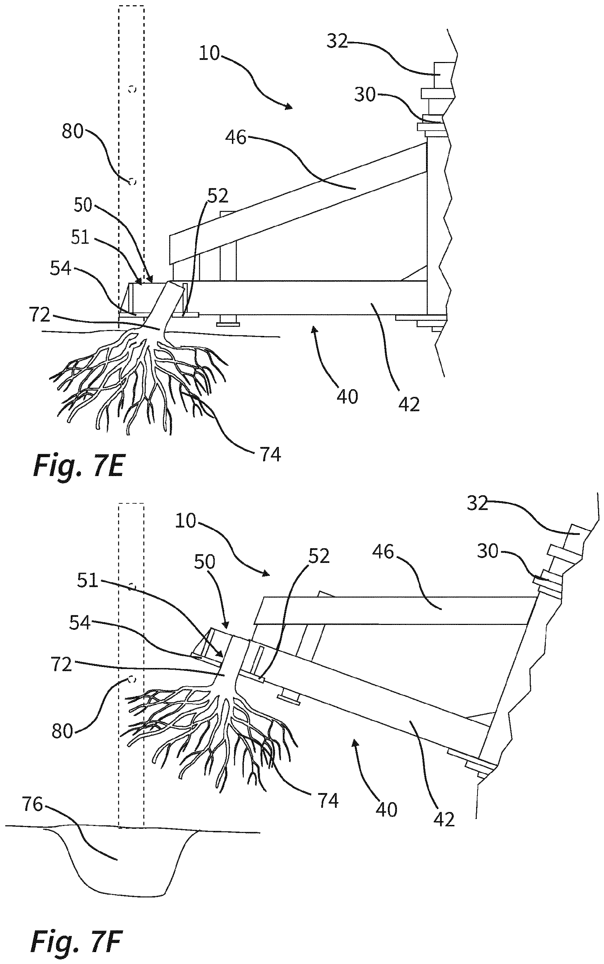

Fig. 7E zeigt den anschließenden Zustand, bei dem die distale Greifbacke 54 so weit zurück entlang der Haupterstreckungsachse 4 in Richtung der proximalen Greifbacke 52 verfahren wurde, so dass der Stamm 72 des Rebstockes 70 zwischen den Greifbacken 52, 54 fixiert ist. Gleichzeitig wurde der Stamm 72 des Rebstockes 70 unter dem Unterstützungsgerüst 80 hervorgezogen.

Fig. 7F zeigt den letzten Schritt der Rodung. Über eine fahrzeugseitige Vorrichtung zur Verstellung einer Neigung der Aufnahmepunkte zueinander wird eine Neigung des Rodegeräts 10 erreicht. Durch das Neigen des Rodegeräts 10 ist der Rebstock 70 mitsamt seinem Wurzelwerk 74 aus dem Erdreich gezogen und dadurch entfernt worden. Das Unterstützungsgerüst 80 bleibt dabei unbeschädigt. Es verbleibt ein Loch 76 im Erdreich, welches zum Anpflanzen eines neuen Rebstockes verwendet werden kann.

## Patentansprüche

1. Rodegerät (10) für ein Fahrzeug (100) zur Rodung von Rebstöcken (70), mit den folgenden Merkmalen:
a. das Rodegerät (10) verfügt über eine Kopplungseinrichtung (20) zur mechanischen Befestigung des Rodegerätes (10) an dem Fahrzeug (100), und
b. das Rodegerät (10) verfügt über einen um eine Hochachse (2) gegenüber der Kopplungseinrichtung (20) schwenkbaren Ausleger (40), und
c. das Rodegerät (10) verfügt an einem distalen Ende des Auslegers (40) über einen Greifer (50) mit zwei gegeneinander beweglichen Greifbacken (52, 54) zum Fixieren des Rebstockes (70), und
d. eine der zwei Greifbacken (52, 54) weist eine Greifkontur (56, 58) auf, die in Richtung eines proximalen Endes des Auslegers (40) weist,
**gekennzeichnet durch** das folgende zusätzliche Merkmal:
e. das Rodegerät (10) weist auf einander gegenüberliegenden Seiten des Auslegers (40) jeweils zwei Greifbacken (52, 54) mit jeweils einer Greifkontur (56, 58) auf.

2. Rodegerät (10) nach Anspruch 1 mit dem folgenden weiteren Merkmal:
a. mindestens eine der Greifbacken (52) ist bewegbar am Ausleger (40) vorgesehen, vorzugsweise mit mindestens einer der folgenden zusätzlichen Merkmale:
b. die bewegbare Greifbacke (52) ist translativ in Richtung einer Haupterstreckungsachse (4) des Auslegers (40) bewegbar, und/oder
c. die bewegbare Greifbacke (52) weist eine Greifkontur (56) auf, die in Richtung des proximalen Endes des Auslegers (40) weist, und/oder
d. zur Bewegung der bewegbaren Greifbacke (52) ist ein Hydraulikzylinder (62) oder ein Pneumatikzylinder vorgesehen, wobei der Zylinder vorzugsweise in Richtung der Haupterstreckungsachse (4) des Auslegers (40) ausgerichtet ist.

3. Rodegerät (10) nach Anspruch 1 oder 2 mit dem folgenden weiteren Merkmal:
a. mindestens eine der Greifbacken (54) ist ortsfest am Ausleger (40) vorgesehen, vorzugsweise mit dem zusätzlichen Merkmal:
b. die ortsfeste Greifbacke (54) weist eine Greifkontur (58) auf, die in Richtung des distalen Endes Auslegers (40) weist.

4. Rodegerät (10) nach einem der Ansprüche 1 bis 3 mit den folgenden weiteren Merkmalen:
a. eine der Greifbacken (52) ist bewegbar am Ausleger (40) vorgesehen und weist eine Greifkontur (56) auf, die in Richtung des proximalen Endes des Auslegers (40) weist, und
b. eine der Greifbacken (54) ist ortsfest am Ausleger (40) vorgesehen und weist eine Greifkontur (58) auf, die in Richtung des distalen Endes des Auslegers (40) weist.

5. Rodegerät (10) nach einem der vorstehenden Ansprüche mit dem folgenden weiteren Merkmal:
a. das Rodegerät (10) verfügt über ein Schwenkgelenk (30), dessen Schwenkachse die Hochachse (2) bildet, wobei das Schwenkgelenk (30) in fester Relativlage zur Kopplungseinrichtung (20) vorgesehen ist.

6. Rodegerät (10) nach einem der vorstehenden Ansprüche mit einem der folgenden weiteren Merkmalen:
a. es ist mindestens ein Antriebszylinder (32), insbesondere ein Hydraulikzylinder oder ein Pneumatikzylinder zur Schwenkverlagerung des Auslegers (40) gegenüber der Kopplungseinrichtung (20) vorgesehen, oder
b. es ist mindestens ein rotativer Antriebsmotor, insbesondere ein Hydraulikmotor oder ein Elektromotor zur Schwenkverlagerung des Auslegers (40) gegenüber der Kopplungseinrichtung (20) vorgesehen.

7. Rodegerät (10) nach einem der vorstehenden Ansprüche mit dem folgenden weiteren Merkmal:
a. der Ausleger (40) weist eine Länge von mindestens 20 cm, bevorzugt von mindestens 40 cm, insbesondere bevorzugt von mindestens 60 cm zwischen der Hochachse (2) und einem Maximalabstand der entfernteren der beiden Greifbacken (52, 54) auf.

8. Rodegerät (10) nach einem der vorstehenden Ansprüche mit dem folgenden weiteren Merkmal:
a. der Ausleger (40) weist mindestens zwei Streben (42, 46) auf, die eine in Richtung zum distalen Ende des Auslegers (40) zueinander konvergierende Ausrichtung aufweisen.

9. Fahrzeug (100) zur Rodung von Rebstöcken (70), mit den folgenden Merkmalen:
a. das Fahrzeug (100) verfügt über eine fahrzeugseitige Kopplungseinrichtung (120) zur Anbringung einer fallweise anbaubaren Vorrichtung, und
b. das Fahrzeug (100) verfügt über ein Rodegerät (10) nach einem der vorstehenden Ansprüche, wobei die vorrichtungsseitige Kopplungseinrichtung (20) mit der genannten fahrzeugseitigen Kopplungseinrichtung (120) gekoppelt ist.

10. Fahrzeug (100) nach Anspruch 9 mit dem folgenden weiteren Merkmal:
a. die fahrzeugseitige Kopplungseinrichtung (120) ist schwenkbar an einem Chassis des Fahrzeuges (100) angebracht.

11. Verfahren zur Rodung von Rebstöcken (70), mit den folgenden Merkmalen:
a. es findet ein Fahrzeug (100) Verwendung, an dem ein Rodegerät (10) nach einem der Ansprüche 1 bis 8 angebracht ist, welches über einen schwenkbaren Ausleger (40) mit einem Greifer (50) mit zwei gegeneinander beweglichen Greifbacken (52,54) verfügt, und
b. das Rodegerät (10) wird mittels des Fahrzeugs (100) in die Nähe des zu entfernenden Rebstockes (70) verbracht, und
c. durch Verschwenken des Auslegers (40) wird der Greifer (50) relativ zum Rebstock (70) in eine Greifpositiv verbracht, in der die Greifbacken (52, 54) beidseitig eines Stammes (72) des Rebstockes (70) angeordnet sind, wobei eine Greifbacke (52) in Haupterstreckungsachse (4) des Auslegers (40) hinter dem Stamm (72) und eine Greifbacke (54) vor dem Stamm (72) positioniert ist, und
d. die Greifbacken (52, 54) werden relativ zueinander verlagert, so dass sie sich beidseitig am Stamm (72) anlegen, und
e. durch Verlagerung des Fahrzeugs (100) und/oder durch Relativbewegung des Auslegers (40) relativ zum Fahrzeug (100) und/oder durch gemeinsames Verlagern der Greifbacken (52, 54) gegenüber dem Ausleger (40) erfolgt eine Kraftbeaufschlagung des Stammes (72), so dass dieser mitsamt Wurzelwerk (74) aus dem Erdreich entfernt wird.

12. Verfahren nach Anspruch 11 mit dem folgenden weiteren Merkmal:
a. zur Rodung von Rebstöcken (70) wird derAusleger (40) nach Anlegen der Greifbacken (52,54) am Stamm (72) verschwenkt, so dass der Greifer (50) mit dem Stamm (72) angehoben wird.

## Claims

1. Clearance device (10) for a vehicle (100) for clearing grapevines (70), having the following features:
a. the clearance device (10) has a coupling device (20) for fixing the clearance device (10) mechanically to the vehicle (100), and
b. the clearance device (10) has a boom (40) that can be pivoted with respect to the coupling device (20) about a vertical axis (2), and
c. at a distal end of the boom (40), the clearance device (10) has a gripper (50) having two gripping jaws (52, 54) that can be moved towards each other for fixing the grapevine (70), and
d. one of the two gripping jaws (52, 54) has a gripping contour (56, 58) which points in the direction of a proximal end of the boom (40),
**characterized by** the following additional feature:
e. on each of two mutually opposite sides of the boom (40), the clearance device (10) has two gripping jaws (52, 54) each having a gripping contour (56, 58).

2. Clearance device (10) according to Claim 1, having the following further feature:
a. at least one of the gripping jaws (52) is provided movably on the boom (40), preferably having at least one of the following additional features:
b. the movable gripping jaw (52) can be moved translationally in the direction of a main extension axis (4) of the boom (40), and/or
c. the movable gripping jaw (52) has a gripping contour (56) which points in the direction of the proximal end of the boom (40), and/or
d. to move the movable gripping jaw (52), a hydraulic cylinder (62) or a pneumatic cylinder is provided, the cylinder preferably being aligned in the direction of the main extension axis (4) of the boom (40).

3. Clearance device (10) according to Claim 1 or 2, having the following further feature:
a. at least one of the gripping jaws (54) is provided in a fixed position on the boom (40),
preferably having the additional feature:
b. the fixed gripping jaw (54) has a gripping contour (58) which points in the direction of the distal end of the boom (40).

4. Clearance device (10) according to one of Claims 1 to 3, having the following further features:
a. one of the gripping jaws (52) is movably provided on the boom (40) and has a gripping contour (56) which points in the direction of the proximal end of the boom (40), and
b. one of the gripping jaws (54) is provided in a fixed position on the boom (40) and has a gripping contour (58) which points in the direction of the distal end of the boom (40).

5. Clearance device (10) according to one of the preceding claims, having the following further feature:
a. the clearance device (10) has a pivot joint (30), of which the pivot axis forms the vertical axis (2), the pivot joint (30) being provided in a fixed position relative to the coupling device (20).

6. Clearance device (10) according to one of the preceding claims, having one of the following further features:
a. at least one drive cylinder (32) is provided, in particular a hydraulic cylinder or a pneumatic cylinder, for the pivoting displacement of the boom (40) with respect to the coupling device (20), or
b. at least one rotary drive motor is provided, in particular a hydraulic motor or an electric motor, for the pivoting displacement of the boom (40) with respect to the coupling device (20).

7. Clearance device (10) according to one of the preceding claims, having the following further feature:
a. the boom (40) has a length of at least 20 cm, preferably of at least 40 cm, in particular preferably of at least 60 cm, between the vertical axis (2) and a maximum spacing from the more distant of the two gripping jaws (52, 54).

8. Clearance device (10) according to one of the preceding claims, having the following further feature:
a. the boom (40) has at least two struts (42, 46), which have an alignment converging towards each other in the direction of the distal end of the boom (40).

9. Vehicle (100) for clearing grapevines (70), having the following features:
a. the vehicle (100) has a coupling device (120) on the vehicle for the attachment of a device that can be installed case-by-case, and
b. the vehicle (100) has a clearance device (10) according to one of the preceding claims, wherein the coupling device (20) on the device is coupled to the aforementioned coupling device (120) on the vehicle.

10. Vehicle (100) according to Claim 9, having the following further feature:
a. the coupling device (120) on the vehicle is pivotably attached to a chassis of the vehicle (100).

11. Method for clearing grapevines (70), having the following features:
a. use is made of a vehicle (100) to which a clearance device (10) according to one of Claims 1 to 8 is attached, having a pivotable boom (40) with a gripper (50) with two gripping jaws (52, 54) that can be moved towards each other, and
b. the clearance device (10) is moved by means of the vehicle (100) into the vicinity of the grapevine (70) to be removed,
c. by pivoting the boom (40), the gripper (50) is moved relative to the grapevine (70) into a gripping position in which the gripping jaws (52, 54) are arranged on both sides of a stem (72) of the grapevine (70), one gripping jaw (52) being positioned in the main extension axis (4) of the boom (40), behind the stem (72), and one gripping jaw (54) being positioned in front of the stem (72), and
d. the gripping jaws (52, 54) are displaced relative to each other so that they bear on the stem (72) on both sides, and
e. by displacing the vehicle (100) and/or by a relative movement of the boom (40) relative to the vehicle (100) and/or by a common displacement of the gripping jaws (52, 54) with respect to the boom (40), a force is applied to the stem (72), so that the latter is removed from the ground together with the roots (74).

12. Method according to Claim 11, having the following further feature:
a. for clearing grapevines (70), after the gripping jaws (52, 54) has been placed on the stem (72), the boom (40) is pivoted, so that the gripper (50) is lifted together with the stem (72).

## Revendications

1. Déracineur (10) destiné à un véhicule (100) de déracinement de ceps de vigne (70), ledit déracineur présentant les caractéristiques suivantes :
a. le déracineur (10) comporte un mécanisme d'accouplement (20) destiné à fixer mécaniquement le déracineur (10) au véhicule (100), et
b. le déracineur (10) comporte une flèche (40) qui peut pivoter sur un axe vertical (2) par rapport au mécanisme d'accouplement (20), et
c. le déracineur (10) comporte à une extrémité distale de la flèche (40) un élément de préhension (50) qui est pourvu de deux mâchoires de préhension (52, 54) qui peuvent être déplacées l'une par rapport à l'autre et qui sont destinées à fixer le cep de vigne (70), et
d. l'une des deux mâchoires de préhension (52, 54) présente un contour de préhension (56, 58) qui est orienté en direction d'une extrémité proximale de la flèche (40), **caractérisé par** la caractéristique supplémentaire suivante :
e. le déracineur (10) comporte sur des côtés opposés de la flèche (40) deux mâchoires de préhension (52, 54) présentant chacune un contour de préhension (56, 58).

2. Déracineur (10) selon la revendication 1 présentant la caractéristique supplémentaire suivante :
a. au moins une des mâchoires de préhension (52) est prévue pour être mobile sur la flèche (40),
de préférence présentant au moins une des caractéristiques supplémentaires suivantes :
b. la mâchoire de préhension mobile (52) est mobile en translation en direction d'un axe d'extension principal (4) de la flèche (40), et/ou
c. la mâchoire de préhension mobile (52) présente un contour de préhension (56) qui est orienté en direction de l'extrémité proximale de la flèche (40), et/ou
d. un vérin hydraulique (62) ou un vérin pneumatique est prévu pour déplacer la mâchoire de préhension mobile (52), le cylindre est de préférence orienté en direction de l'axe d'extension principal (4) de la flèche (40).

3. Déracineur (10) selon la revendication 1 ou 2 présentant la caractéristique supplémentaire suivante :
a. au moins une des mâchoires de préhension (54) est prévue de manière fixe sur la flèche (40),
de préférence présentant la caractéristique supplémentaire suivante :
b. la mâchoire de préhension fixe (54) présente un contour de préhension (58) qui est orienté en direction de l'extrémité distale de la flèche (40).

4. Déracineur (10) selon l'une des revendications 1 à 3 présentant les caractéristiques supplémentaires suivantes :
a. l'une des mâchoires de préhension (52) est prévue pour être mobile sur la flèche (40) et présente un contour de préhension (56) qui est orienté en direction de l'extrémité proximale de la flèche (40), et
b. l'une des mâchoires de préhension (54) est prévue de manière fixe sur la flèche (40) et présente un contour de préhension (58) qui est orienté en direction de l'extrémité distale de la flèche (40).

5. Déracineur (10) selon l'une des revendications précédentes présentant la caractéristique supplémentaire suivante :
a. le déracineur (10) comporte une articulation pivotante (30) dont l'axe de pivotement forme l'axe vertical (2), l'articulation pivotante (30) étant prévue dans une position relative fixe par rapport au mécanisme d'accouplement (20).

6. Déracineur (10) selon l'une des revendications précédentes présentant l'une des caractéristiques supplémentaires suivantes :
a. au moins un vérin d'entraînement (32), en particulier un vérin hydraulique ou un vérin pneumatique, est prévu pour faire pivoter la flèche (40) par rapport au mécanisme d'accouplement (20), ou
b. au moins un moteur d'entraînement en rotation, notamment un moteur hydraulique ou un moteur électrique, est prévu pour faire pivoter la flèche (40) par rapport au mécanisme d'accouplement (20).

7. Déracineur (10) selon l'une des revendications précédentes présentant la caractéristique supplémentaire suivante :
a. la flèche (40) a une longueur d'au moins 20 cm, de préférence d'au moins 40cm, de manière particulièrement préférée d'au moins 60 cm entre l'axe vertical (2) et une distance maximale de la plus éloignée des deux mâchoires de préhension (52, 54).

8. Déracineur (10) selon l'une des revendications précédentes présentant la caractéristique supplémentaire suivante :
a. la flèche (40) comporte au moins deux entretoises (42, 46) qui présente une orientation convergente l'une par rapport à l'autre en direction de l'extrémité distale de la flèche (40).

9. Véhicule (100) de déracinement de ceps de vigne (70), ledit véhicule présentant les caractéristiques suivantes :
a. le véhicule (100) comporte un mécanisme d'accouplement côté véhicule (120) destiné à fixer un dispositif qui peut être fixé au cas par cas, et
b. le véhicule (100) comporte un déracineur (10) selon l'une des revendications précédentes, le mécanisme d'accouplement côté dispositif (20) est accouplé audit mécanisme d'accouplement côté véhicule (120).

10. Véhicule (100) selon la revendication 9 présentant la caractéristique supplémentaire suivante :
a. le mécanisme d'accouplement côté véhicule (120) est fixé de manière pivotante à un châssis du véhicule (100).

11. Procédé de déracinement de ceps de vigne (70), ledit procédé présentant les caractéristiques suivantes :
a. un véhicule (100) est utilisé sur lequel est fixé un déracineur (10) selon l'une des revendications 1 à 8 qui comporte une flèche pivotante (40) pourvue d'un élément de préhension (50) pourvu de deux mâchoires de préhension (52, 54) mobiles l'une par rapport à l'autre, et
b. le déracineur (10) est amené au moyen du véhicule (100) à proximité du cep de vigne (70) à enlever, et
c. le pivotement de la flèche (40) permet de d'amener l'élément de préhension (50) par rapport au cep de vigne (70) dans une position de préhension dans laquelle les mâchoires de préhension (52, 54) sont disposées de part et d'autre d'un tronc (72) du cep de vigne (70), une mâchoire de préhension (52) étant positionnée derrière le tronc (72), et une mâchoire de préhension (54) étant positionnée devant le tronc (72), par référence à l'axe d'extension principal (4) de la flèche (40) et
d. les mâchoires de préhension (52, 54) sont déplacées l'une par rapport à l'autre de façon à venir en appui sur le tronc (72) des deux côtés, et
e. le déplacement du véhicule (100) et/ou le mouvement relatif de la flèche (40) par rapport au véhicule (100) et/ou le déplacement conjoint des mâchoires de préhension (52, 54) par rapport à la flèche (40) permettent d'appliquer une force sur le tronc (72) de façon à éloigner celui-ci du sol avec les racines (74).

12. Procédé selon la revendication 11 présentant la caractéristique supplémentaire suivante :
a. pour déraciner les ceps de vigne (70), la flèche (40) est pivotée après que les mâchoires de préhension (52, 54) ont été appliquées sur le tronc (72) de façon à soulever l'élément de préhension (50) avec le tronc (72).
